# EUROPÄISCHE PATENTSCHRIFT

(11) **EP 3 524 376 B1**
(45) Veröffentlichungstag und Bekanntmachung des Hinweises auf die Patenterteilung: **04.10.2023**
(21) Anmeldenummer: 18208792.4
(22) Anmeldetag: 28.11.2018
(51) Int. Cl.: B23B 29/26, B23B 27/10

(54) **SCHNEIDVORRICHTUNG ZUR SPANABHEBENDEN BEARBEITUNG VON WERKSTÜCKEN**
CUTTING DEVICE FOR MACHINING WORKPIECES
DISPOSITIF DE COUPE DESTINÉ À L'USINAGE DE PIÈCES PAR ENLEVEMENT DE COPEAUX

(30) Priorität: 13.02.2018 DE 202018100771 U
(43) Veröffentlichungstag der Anmeldung: 14.08.2019
(73) Patentinhaber: KARL-HEINZ ARNOLD GmbH, 73760 Ostfildern (DE)
(72) Erfinder: BRAUN, Harald, 73061 Ebersbach (DE); MEDITZ, Werner, 72574 Bad Urach (DE)
(74) Vertreter: Patentanwälte Magenbauer & Kollegen Partnerschaft mbB

(56) Entgegenhaltungen:
- CN-U- 204 396 937
- DE-A1-102009 060 046
- DE-U1-202010 017 034
- DE-U1-202017 000 616
- JP-A- H0 751 980
- US-A1- 2012 060 336
- US-B1- 7 104 171

## Beschreibung

Die Erfindung betrifft eine Schneidvorrichtung zur spanabhebenden Bearbeitung von Werkstücken, mit einem Werkzeughalter, der mehrere in einer Aufreihungsrichtung aneinander gereihte Werkzeugaufnahmen für Schneidwerkzeuge aufweist, wobei der Werkzeughalter (12) ein Kühlschmierstoffkanalsystem (17) aufweist, das mehrere jeweils in einer Werkzeugaufnahme (15a-e) ausmündende Kühlschmierstoff-Auslassöffnungen (19a-e) zur Fluidverbindung mit einem das in der Werkzeugaufnahme (15a-e) fixierte Schneidwerkzeug (13) durchsetzenden Werkzeug-Kühlschmierstoffkanal (20) aufweist, wobei dem Kühlschmierstoff-Hauptkanal (27) Absperrmittel zugeordnet sind.

Die DE 20 2010 017 034 U1, die eine derartige Schneidvorrichtung gemäß dem Oberbegriff des Anspruchs 1 offenbart, offenbart einen Mehrfach-Werkzeughalter für eine Drehmaschine. Es sind mehrere in einer Aufreihungsrichtung hintereinander angeordnete Werkzeugaufnahmen für Schneidwerkzeuge vorgesehen, wobei im Werkzeughalter ein Kühlschmierstoffkanalsystem mit einem Hauptkanal und von diesem in die Werkzeugaufnahmen abzweigende Seitenkanäle ausgebildet ist. Es ist ein Anschlussstutzen vorgesehen, über den eingespeist wird. Im Kühlmittel-Hauptkanal sind ferner Absperrmittel in Form von Ventilen eingeschaltet, wodurch der Volumenstrom zu einer zugeordneten Werkzeugaufnahme durch entsprechende Betätigung des Ventils entweder geöffnet oder geschlossen werden kann.

Es ist bekannt, Schneidvorrichtungen beispielsweise in Langdrehautomaten einzusetzen. Das zu bearbeitende Werkstück, bei dem es sich beispielsweise um eine Metallstange handeln kann, ist in diesem Fall an einer Spindel gelagert und wird durch diese in Rotation versetzt, wobei ein zuvor an das Werkstück herangefahrenes Schneidwerkzeug für spanabhebende Bearbeitung sorgt. Beispielsweise ist es möglich, das Werkstück mittels Stechdrehen zu bearbeiten und beispielsweise dadurch eine Ringnut über den Umfang des Werkstücks einzuschneiden.

Schneidwerkzeuge zur spanabhebenden Bearbeitung befinden sich in der Regel in Werkzeughaltern, von denen einer oberhalb des zu bearbeitenden Werkstücks angeordnet ist, das einerseits in der Regel um eine Achse linear beweglich gelagert ist, um eine Zustellbewegung und somit das Zustellen des betreffenden Schneidwerkzeugs an das zu bearbeitende Werkstück zu ermöglichen. Die Schneidwerkzeuge sind im Werkzeughalter mittels Klemmmitteln festgeklemmt. Insbesondere bei Verschleiß der Schneidmittel, bei denen es sich insbesondere um Wendeschneidplatten handelt, besteht der Bedarf, das Schneidwerkzeug auszuwechseln. Dabei ist die Klemmung zu lösen, um das Schneidwerkzeug aus der Werkzeugaufnahme herauszunehmen. Nach Austausch der Schneidmittel ist das neue Werkzeug wieder in die Aufnahme einzusetzen und festzuklemmen. Dabei ist auch das neue Werkzeug wieder exakt auszurichten, insbesondere hinsichtlich dessen Lage bezüglich des zu bearbeitenden Werkstücks oder bezüglich der anderen im Werkzeughalter befindlichen Schneidwerkzeuge.

Es ist bekannt, Schneidwerkzeuge mit interner Kühlung einzusetzen. Dabei wird das Schneidwerkzeug in der Regel von einem Kühlschmierstoffkanal durchsetzt, der an eine Kühlschmierstoffquelle anzuschließen ist. Der Kühlschmierstoff tritt mittels Düsen im Bereich der Schneidmittel aus und trifft dann auf den zu kühlenden Bereich zwischen dem zu bearbeitenden Werkstück und den Schneidmitteln des Schneidwerkzeugs. Es ist nicht unüblich, dass nicht jede Werkzeugaufnahme des Werkzeughalters mit einem Schneidwerkzeug belegt ist. Ferner ist es gängig, im gleichen Werkzeughalter Schneidwerkzeuge einzusetzen, die keine interne Kühlmittelzuführung haben.

Aus dem Stand der Technik ist es bekannt, je nach Anzahl der Schneidwerkzeuge mit interner Kühlschmierstoffzuführung individuell einzelne Fluidanschlüsse an die betreffenden Schneidwerkzeuge zu legen. Da sich die Belegung des Werkzeughalters mit Schneidwerkzeugen ändern kann, ist für jeden Einsatz stets neu zu prüfen wie viel Schneidwerkzeuge mit interner Kühlschmierstoffzuführung im Werkzeughalter aufgenommen sind und abhängig davon die Fluidzufuhrleitungen zu legen. Dies ist aufwendig.

Aus einem druckschriftlich nicht nachweisbaren Stand der Technik ist es bekannt, am Werkzeughalter einen Fluidverteiler anzuordnen womit die Wege für die Fluidzuführung zu den einzelnen Schneidwerkzeugen mit interner Kühlung im Werkzeughalter verkürzt werden, was jedoch das zuvor geschilderte Problem der Variation der Schneidwerkzeuge im Werkzeughalter, die einen internen Kühlschmierstoffkanal aufweisen, nicht löst. Ferner beansprucht der Fluidverteiler Platz, was sich nachteilig auf die Baugröße der Schneidvorrichtung auswirkt. Aufgabe der Erfindung ist es, eine Schneidvorrichtung der eingangs erwähnten Art zu schaffen, mit der die Zuführung von Kühlschmierstoff an die im Werkzeughalter aufgenommenen Schneidwerkzeuge in einfacher Weise sowie zeitsparend durchgeführt werden kann.

Diese Aufgabe wird durch eine Schneidvorrichtung mit den Merkmalen des unabhängigen Anspruchs 1 gelöst. Weiterbildungen der Erfindung sind in den Unteransprüchen dargestellt. Die erfindungsgemäße Schneidvorrichtung zur spanabhebenden Bearbeitung von Werkstücken zeichnet sich dadurch aus, dass das Kühlschmierstoffkanalsystem mehrere jeweils mit einer Kühlschmierstoffquelle verbindbare Einspeiseanschlüsse an einer Außenseite des Werkzeughalters aufweist und die Absperrmittel derart in den Kühlschmierstoff-Hauptkanal einschaltbar sind, dass das Kühlschmierstoffkanalsystem in mehrere Systemabschnitte unterteilbar ist, die jeweils unabhängig voneinander über diesen zugeordnete Einspeiseanschlüsse mit Kühlschmierstoff beaufschlagbar sind. Unabhängig von der Anzahl der in den Werkzeugaufnahmen festgeklemmten Schneidwerkzeuge ist stets dasselbe Kühlschmierstoffkanalsystem nutzbar. Sind verschiedene Werkzeugaufnahmen nicht belegt, so sind die zugehörigen Kühlschmierstoff-Auslassöffnungen in einfacher Weise mit Verschlussmitteln zu verschließen, sodass hier kein Kühlschmierstoff austritt. Sind in verschiedenen Werkzeugaufnahmen Schneidwerkzeuge ohne interne Kühlschmierstoffzufuhr eingesetzt beziehungsweise festgeklemmt, so bedarf es hier keiner separaten Verschlussmittel, da die zugehörige Kühlschmierstoff-Auslassöffnung durch den Klemmschaft des Schneidwerkzeugs selber verschlossen wird. Es ist also nicht - wie beim Stand der Technik stets der Fall - notwendig, die Kühlschmierstoff-Versorgung an die Konfiguration der Schneidwerkzeuge im Werkzeughalter anzupassen und an die festgeklemmten Schneidewerkzeuge Kühlschmierstoffleitungen sei es direkt von einer Kühlschmierstoffquelle oder über einen Fluidverteiler heranzuführen. Bei einer Weiterbildung der Erfindung weist das Kühlschmierstoffkanalsystem wenigstens einen Kühlschmierstoff-Hauptkanal auf, der mit den Einspeiseanschlüssen verbunden ist und von dem aus Kühlschmierstoff-Auslasskanäle abzweigen, die jeweils mit den Kühlschmierstoff-Auslassöffnungen verbunden sind.

Zweckmäßigerweise ist im Werkzeughalter ein zentraler Kühlschmierstoff-Hauptkanal ausgebildet, von dem aus die Kühlschmierstoff-Auslasskanäle abzweigen.

In besonders bevorzugter Weise erstreckt sich der Kühlschmierstoff-Hauptkanal in der Aufreihungsrichtung der Werkzeugaufnahmen. Der Kühlschmierstoff-Hauptkanal kann sich also quer zur Längsrichtung der Werkzeugaufnahmen erstrecken, wodurch sämtliche Werkstückaufnahmen durch das Abzweigen von Kühlschmierstoff-Auslasskanälen aus demselben Kühlschmierstoff-Hauptkanal versorgt werden können.

Es ist möglich, dass pro Werkzeugaufnahme eine einzelne Kühlschmierstoff-Auslassöffnung vorgesehen ist, die dann bei festgeklemmtem Schneidwerkzeug mit dem Werkzeug-Kühlschmierstoffkanal in Fluidverbindung steht. Es ist jedoch auch möglich, pro Werkzeugaufnahme mehrere Kühlschmierstoff-Auslassöffnungen vorzusehen, die dann gemeinsam genutzt werden, beispielsweise wenn das festgeklemmte Schneidwerkzeug mehrere Kühlschmierstoffübergabestellen besitzt oder alternativ von denen lediglich eine genutzt wird und die wenigstens eine andere mittels einem Verschlusselement verschlossen ist.

Es ist möglich, dass die nicht mit einer Kühlschmierstoffquelle verbundenen Einspeiseanschlüsse jeweils mittels Verschlusselementen verschlossen sind. Es ist also möglich, die Fluidverbindung mit der Kühlschmierstoffquelle an unterschiedlichen Seiten des Werkzeughalters anzubringen, abhängig beispielsweise von den Platzverhältnissen.

Dem Kühlschmierstoffmittel-Hauptkanal sind Absperrmittel zugeordnet, die derart in den Kühlschmierstoffmittel-Hauptkanal einschaltbar sind, dass das Kühlschmierstoffsystem in mehrere Systemabschnitte unterteilbar ist, die jeweils unabhängig voneinander über die zugeordneten Einspeiseanschlüsse mit Kühlschmierstoff beaufschlagbar sind. Dadurch ist es möglich, die unterschiedlichen Systemabschnitte mit unterschiedlichen Kühlschmierstoffdrücken zu fahren, was die Flexibilität des Werkzeughalters beim Einsatz weiter erhöht.

In besonders bevorzugter Weise weisen die Absperrmittel einen von der Außenseite des Werkzeughalters her betätigbares Absperrelement auf. Als Absperrelement eignet sich beispielsweise eine Absperrschraube.

Bei einer Weiterbildung der Erfindung umfasst die Schneidvorrichtung wenigstens ein Schneidwerkzeug mit einem Klemmschaft, der über an der zugeordneten Werkzeugaufnahme angeordnete Klemmmittel in der Werkzeugaufnahme festgeklemmt ist, wobei der Klemmschaft zumindest teilweise von dem Werkzeug-Kühlschmierstoffkanal durchsetzt ist, wobei der Werkzeug-Kühlschmierstoffkanal eine Werkzeug-Kühlschmierstoff-Einlassöffnung aufweist, die in Fluidverbindung mit der zugeordneten Kühlschmierstoff-Auslassöffnung am Werkzeughalter steht.

In besonders bevorzugter Weise ist die Werkzeug-Kühlschmierstoff-Einlassöffnung als Langloch ausgebildet. Dadurch ist eine Übergabe von Kühlschmierstoff aus der Kühlschmierstoff-Auslassöffnung am Werkzeughalter an den Werkzeugkühlschmierstoffkanal auch dann zuverlässig möglich, falls die Werkzeug-Kühlschmierstoff-Einlassöffnung nicht exakt fluchtend zur zugeordneten Kühlschmierstoff-Auslassöffnung ausgerichtet ist.

Bei einer Weiterbildung der Erfindung weisen die Klemmmittel eine längs zur zugeordneten Werkzeugaufnahme ausgebildete Klemmleiste auf, in der mehrere Klemmelemente aufgenommen sind, die jeweils zwischen einer das Schneidwerkzeug in der Werkzeugaufnahme festklemmenden Klemmstellung und einer das Schneidwerkzeug freigebenden Freigabestellung verstellbar sind.

Zweckmäßigerweise weisen die Klemmelemente jeweils einen Klemmkeil auf, der in der Klemmstellung in Anlage an den Klemmschaft des zugeordneten Schneidwerkzeugs liegt und dieses in der Werkzeugaufnahme festklemmt.

Es ist möglich, dass die Klemmelemente jeweils eine Klemmschraube aufweisen, auf der der Klemmkeil sitzt, wobei die Klemmschraube beim Einschrauben in ein zugeordnetes Gewindeloch an der Klemmleiste den Klemmkeil in die Klemmstellung verlagert.

In besonders bevorzugter Weise sind mehrere Klemmelement-Gruppen zu jeweils wenigstens zwei Klemmelementen an der Klemmleiste angeordnet.

Es ist möglich, dass der Klemmschaft wenigstens eines der Schneidwerkzeuge mehrteilig ist, mit einem Schneidmittel aufweisenden Tragteil und einem Positionsvorgabeteil, die voneinander unabhängig zugeordneten Werkzeugaufnahme festklemmbar sind, derart, dass dem Positionsvorgabeteil eine Klemmelement-Gruppe und dem Tragteil eine andere Klemmelement-Gruppe zugeordnet und durch diese in der Werkzeugaufnahme festgeklemmt sind.

Ein bevorzugtes Ausführungsbeispiel der Erfindung ist in der Zeichnung dargestellt wird im Folgenden näher erläutert. In der Zeichnung zeigen:
- Figur 1: eine Draufsicht auf ein bevorzugtes Ausführungsbeispiel der erfindungsgemäßen Schneidvorrichtung,
- Figur 2: eine Vorderansicht auf die Schneidvorrichtung von Figur 1,
- Figur 3: eine Seitenansicht auf die Schneidvorrichtung von Figur 1,
- Figur 4: eine Seitenansicht von der gegenüber der Ansicht aus Figur 3 anderen Seite des Schneidwerkzeugs aus Figur 1,
- Figur 5: eine Draufsicht auf den Werkzeughalter der Schneidvorrichtung aus Figur 1 ohne Schneidwerkzeug, jedoch mit mittels gestrichelter Linien angedeutetem Kühlschmierstoffkanalsystem,
- Figur 6: eine Vorderansicht auf den Werkzeughalter von Figur 5,
- Figur 7: einen Längsschnitt durch den Werkzeughalter von Figur 6 entlang der Linie VII-VII,
- Figur 8: eine Unteransicht eines Schneidwerkzeugs aus Figur 1 mit angedeuteten Werkzeug-Kühlschmierstoffkanal,
- Figur 9: eine Seitenansicht auf das Schneidwerkzeug von Figur 8,
- Figur 10: eine Draufsicht auf ein Klemmelement zum festklemmen des Schneidwerkzeugs aus Figur 1 und
- Figur 11: eine Seitenansicht auf das Klemmelement von Figur 10.

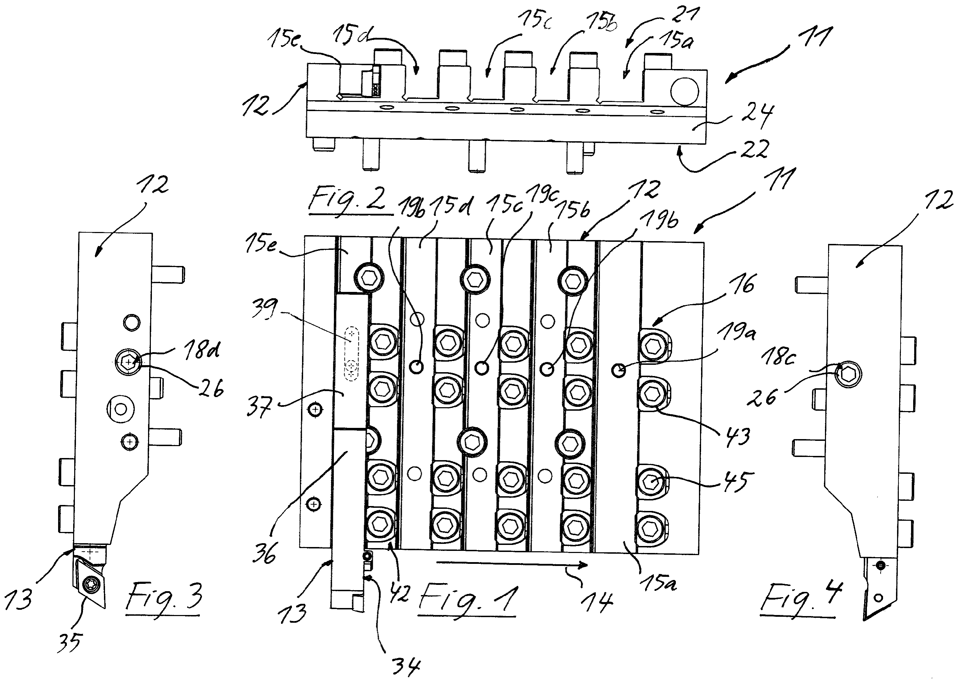

Die Figuren 1 bis 11 zeigen ein bevorzugtes Ausführungsbeispiel der erfindungsgemäßen Schneidvorrichtung 11. Die Schneidvorrichtung 11 wird im Folgenden beispielhaft beim Einsatz in einem Langdrehautomaten beschrieben. Die Schneidvorrichtung 11 umfasst in diesem Fall einen Werkzeughalter 12, der Teil eines Werkzeugwechselsystems ist, zu denen anders aufgebaute Werkzeughalter mit anderen Werkzeugen gehören. Der hier beispielhaft dargestellte Werkzeughalter 12 dient zur Halterung von Schneidwerkzeugen 13, die insbesondere zur spanabhebenden Außenbearbeitung von sich rotierenden stangenartigen Werkstücken dienen. Beispielsweise können durch die Schneidwerkzeuge 13 Nuten in das zu bearbeitende Werkstück eingeschnitten werden. Dieser Bearbeitungsvorgang wird auch Stechdrehen genannt.

Der beispielhaft dargestellte Werkzeughalter 12 besitzt mehrere in einer Aufreihungsrichtung 14 aneinander gereihte Werkzeugaufnahmen 15a-e für Schneidwerkzeuge 13. Die Werkzeugaufnahmen 15a-e sind jeweils nutartig ausgebildet und dienen zur Aufnahme jeweils eines Schneidwerkzeugs 13.

Den Werkzeugaufnahmen 15a-e sind jeweils Klemmmittel 16 zum Festklemmen des Schneidwerkzeugs 13 zugordnet, die nachfolgend noch näher beschrieben werden.

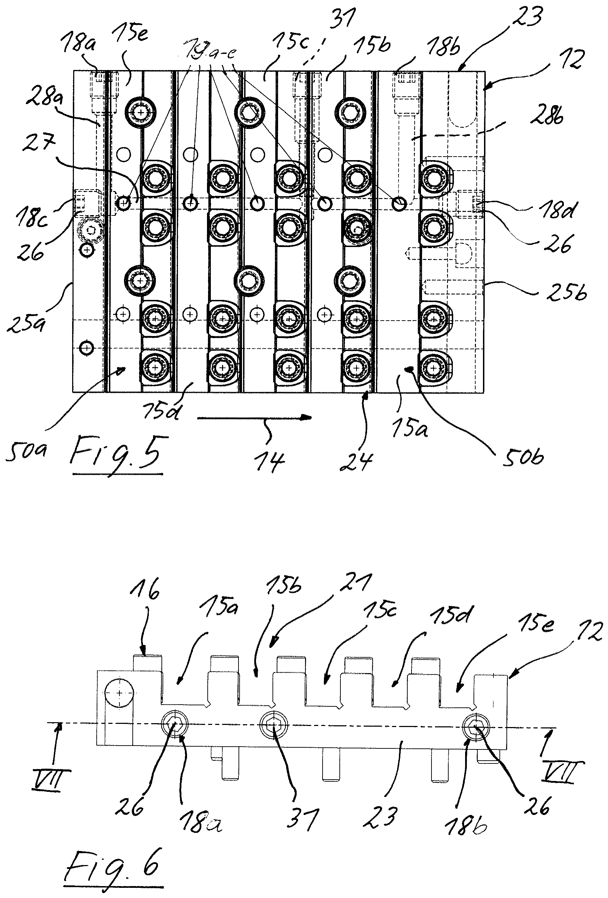

Wie insbesondere in Figur 5 dargestellt, ist im Werkzeughalter 12 ein Kühlschmierstoffkanalsystem 17 ausgebildet, dass mehrere jeweils mit einer Kühlschmierstoffquelle (nicht dargestellt) verbindbare Einspeiseanschlüsse 18a-d an einer Außenseite des Werkzeughalters 12 und mehrere jeweils in einer Werkzeugaufnahme 15a-e ausmündende Kühlschmierstoff-Auslassöffnungen 19a-e zur Fluidverbindung mit einem das in der Werkzeugaufnahme 15 fixierten Schneidwerkzeug 13 durchsetzenden Werkzeug-Kühlschmierstoffkanal 20 aufweist.

Wie in den Figuren 2 und 6 gezeigt, besitzt der Werkzeughalter 12 eine Vorderseite 21, an der beispielhaft fünf Werkzeugaufnahmen 15a-e in Form von länglichen Nuten ausgebildet sind. Die Werkzeugaufnahmen 15a-e erstrecken sich jeweils mit ihrer Längsachse quer zur Aufreihungsrichtung 14.

Wie beispielhaft in Figur 6 gezeigt, können die Werkzeugaufnahmenamen 15a-e unterschiedliche Querschnitte aufweisen, beispielsweise kann eine der Werkzeugaufnahmen 15a eine größere Nutbreite aufweisen, als der Rest der Werkzeugaufnahmen 15b-e. Die Konfektionierung der Werkzeugaufnahmen 15a-e ist jedoch beliebig, sodass selbstverständlich mehr als fünf Werkzeugaufnahmen 15a-e in unterschiedlichen Querschnittsabmessungen vorgesehen sein können.

Der Vorderseite 21 des Werkzeughalters gegenüberliegend erstreckt sich eine Rückseite 22. Der Werkzeughalter 12 ist insgesamt plattenartig ausgestaltet und besitzt Furchen in Form der Werkzeugaufnahmen 15a-e, so dass der Werkzeughalter insgesamt auch als "Rechen" bezeichnet werden kann. Zweckmäßigerweise hat der Werkzeughalter 12 eine quaderförmige Gestalt, wobei zusätzlich zur Vorderseite 21 und Rückseite 22 eine Oberseite und einer dieser entgegengesetzte Unterseite 24 sowie zwei einander entgegengesetzt liegende Längsseiten 25a, 25b ausgebildet sind.

Wie beispielhaft in Figur 5 gezeigt, sind mehrere Einspeiseanschlüsse 18a-d vorgesehen, von denen zwei Einspeiseanschlüsse 18a, 18b an der Oberseite 23 ein weiterer Einspeiseanschluss 18c an der einen Längsseite 25a und weiterer Einspeiseanschluss 18d an der anderen Längsseite 25b ausgebildet sind. An die Einspeiseanschlüsse 18a-d können Fluidleitungen angeschlossen werden, die ihrerseits an eine Kühlschmierstoffquelle angeschlossen sind. Je nach Platzbedarf im Langdrehautomat kann eine der Einspeiseanschlüsse 18a-d ausgewählt werden, während die anderen Einspeiseanschlüsse mittels Verschlusselementen 26 verschlossen sind.

Es ist jedoch auch möglich, wie hier in Figur 5 gezeigt, mehrere Einspeiseanschlüsse 18-d, beispielsweise die beiden an der Oberseite 23 ausgebildeten Einspeiseanschlüsse 18a, 18b zu verwenden.

Wie insbesondere in Figur 5 gezeigt, weist das Kühlschmierstoffkanalsystem 17 einen Kühlschmierstoff-Hauptkanal 27 auf, der mit allen Einspeiseanschlüssen 18a-d verbunden ist. Der Kühlschmierstoff-Hauptkanal erstreckt sich längs der Aufreihungsrichtung 14 und unterfährt somit sämtliche Werkzeugaufnahmen 15a-e.

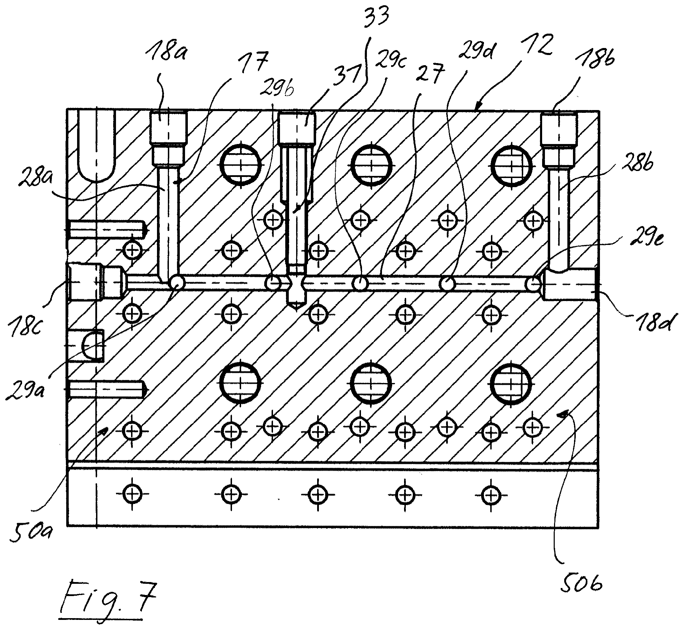

Im gezeigten Beispielsfall erstreckt sich der Kühlschmierstoff-Hauptkanal 27 vom Einspeiseanschluss 18c an der einen Längsseite 25a zum Einspeiseanschluss 18d an der entgegengesetzten anderen Längsseite 25b. Dies ist insbesondere in Figur 7 detailliert dargestellt.

Wie ferner in Figur 7 gezeigt, erstreckt sich vom ersten Einspeiseanschluss 18a an der Oberseite 23 des Werkzeughalters 13 ein Einspeisekanal 28a zum Kühlschmierstoff-Hauptkanal 27. Der zweite Einspeiseanschluss 18b ist der anderen Längsseite 25b des Werkzeughalters 12 zugeordnet, wobei sich von diesem Einspeiseanschluss 18b ein Einspeisekanal 28b hin zum Kühlschmierstoff-Hauptkanal 27 erstreckt.

Wie weiter in Figur 7 gezeigt, gehen von dem Kühlschmierstoff-Hauptkanal 27 jeweils Kühlschmierstoff-Auslasskanäle 29a-e ab, die jeweils über Kühlschmierstoff- Auslassöffnungen 19a-e in den Werkzeugaufnahmen 15a-e und zwar dort am Boden der Werkzeugaufnahmen 15a-e ausmünden. Somit kann jede Werkzeugaufnahme 15a-e über das Kühlschmierstoffkanalsystem 17 mit Kühlschmierstoff versorgt werden.

Wird nur einer der Einspeiseanschlüsse 18a-d genutzt, so sind die anderen, wie erwähnt, mit Verschlusselementen 26 fluiddicht verschlossen. Bei den Verschlusselementen 26 kann es sich beispielsweise um Gewindestifte handeln.

Auch die nicht genutzten Kühlschmierstoff-Auslassöffnungen 19a-e, also solche, bei denen an den zugehörigen Werkzeugaufnahme 15a-e keine Schneidwerkzeuge 13 festgeklemmt sind, lassen sich durch Verschlusselemente 26, beispielsweise ebenfalls mittels Gewindestiften, fluiddicht verschließen.

Wie insbesondere in Figur 7 gezeigt, sind dem Kühlschmierstoff-Hauptkanal 27 Absperrmittel zugeordnet, die derart in den Kühlschmierstoff-Hauptkanal 27 einschaltbar sind, dass das Kühlschmierstoffkanalsystem 17 in mehrere Systemabschnitte 50a, 50b unterteilbar ist, die jeweils unabhängig voneinander über diesen zugeordnete Einspeiseanschlüsse 18a-d mit Kühlschmierstoff beaufschlagbar sind. Im Beispielsfall weisen die Absperrmittel ein von der Außenseite des Werkzeughalters, insbesondere von der Oberseite 23 her betätigbares Absperrelement in Form einer Sperrschraube 31 auf.

Wie insbesondere in Figur 7 gezeigt, lässt sich die Sperrschraube 31 zwischen einer in der Figur 7 gezeigten Durchgangsstellung 32, in der der Durchgang durch den kompletten Kühlschmierstoff-Hauptkanal 27 offen ist und einer Sperrstellung 33, in der der Durchgang durch den Kühlschmierstoff-Hauptkanal 27 an dieser Stelle unterbrochen ist, verstellen. Die Sperrschraube 31 dient dazu, um bei Bedarf zwei separate Drucksysteme zu erzeugen. In der Sperrstellung 33 der Sperrschraube 31 lässt sich beispielsweise der linke Systemabschnitt 50a wahlweise über Einspeiseanschlüsse 18a oder 18c mit Kühlschmierstoff eines ersten Drucks beaufschlagen, während unabhängig der zweite Systemabschnitt 50b wahlweise über die Einspeiseanschlüsse 18b, 18d mit Kühlschmierstoff eines zweiten, beispielsweise geringeren oder größeren Drucks beaufschlagbar ist. Es lässt sich beispielsweise für den linken Systemabschnitt 34a ein Druck von 40bar und für den rechten Systemabschnitt 34b einen Druck von 60bar einstellen, der dann den festgeklemmten Schneidwerkzeugen 13 zur Verfügung gestellt wird.

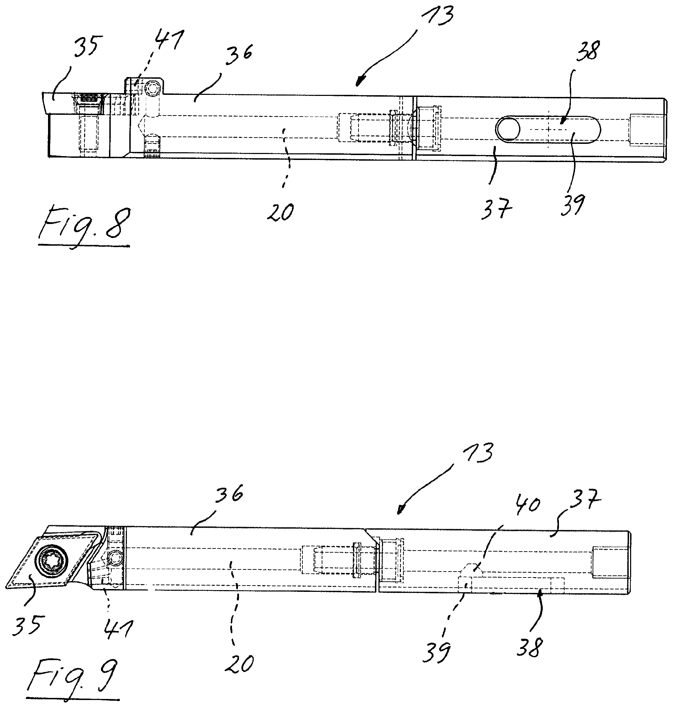

Wie insbesondere in den Figuren 3, 4, 8 und 9 gezeigt, besitzt das Schneidwerkzeug 13 einen im Beispielsfall quaderförmigen Klemmschaft 34 und in Kontakt mit dem zu bearbeiteten Werkstück zu bringende oder stehende Schneidmittel 35. Bei dem Klemmschaft 34 kann es sich um einen einteiligen Klemmschaft 34 handeln oder, wie insbesondere in den Figuren 8 und 9 gezeigt, um einen mehrteiligen Klemmschaft 34, der ein mit den Schneidmitteln versehenes Tragteil 36 und ein Positionsvorgabeteil 37 besitzt.

Wie insbesondere in Figuren 8 und 9 gezeigt, ist der Klemmschaft 34, also im Beispielsfall das Tragteil 36 und das Positionsvorgabeteil 37 vom Werkzeug-Kühlschmierstoffkanal 20 durchsetzt, wobei der Werkzeug-Kühlschmierstoffkanal 20 eine Werkzeug-Kühlschmierstoff-Einlassöffnung 38 aufweist, die in Fluidverbindung mit der zugeordneten Kühlschmierstoff-Auslassöffnung 30a-e steht.

Wie insbesondere die Figur 8 zeigt, ist die WerkzeugKühlschmierstoff-Einlassöffnung 38 als Langloch ausgebildet und besitzt einen nach außen offenen Langlochabschnitt 39, der in einen kurzen Kanalabschnitt 40 mündet, der seinerseits mit dem Werkzeug-Kühlschmierstoffkanal 20 verbunden ist. Der Werkzeug-Kühlschmierstoffkanal 20 erstreckt sich in den vorderen Bereich des Tragteils 36 und mündet dort, beispielsweise mittels dreier Düsenöffnungen 41 aus, wobei die Düsenöffnungen 41 derart ausgerichtet sind, dass Kühlschmierstoff beim Austritt auf die beim spanabhebenden Bearbeiten des Werkstücks eine hohe Temperatur aufweisende Spanfläche gelangt. Die langlochartige Ausgestaltung der Werkzeug-Kühlschmierstoff-Einlassöffnung 38 bietet den Vorteil, dass es keiner exakt fluchtenden Ausrichtung zur zugeordneten Kühlschmierstoff-Auslassöffnung 30 am Boden der Werkzeugaufnahme 15a-e bedarf. Im gezeigten Beispielsfall befindet sich die Werkzeug-Kühlschmierstoff-Einlassöffnung 38 an der Unterseite des Positionsvorgabeteils 37.

Wie insbesondere in den Figuren 1 und 5 dargestellt, weisen die Klemmmittel eine längs zur zugeordneten Werkzeugaufnahme 15a-e ausgebildete Klemmleiste 42 auf, in der mehrere Klemmelemente 43 aufgenommen sind, die jeweils zwischen einer das Schneidwerkzeug 13 in der Werkzeugaufnahme 15a-e festklemmenden Klemmstellung und einer das Schneidwerkzeug 13 freigebenden Freigabestellung verstellbar sind.

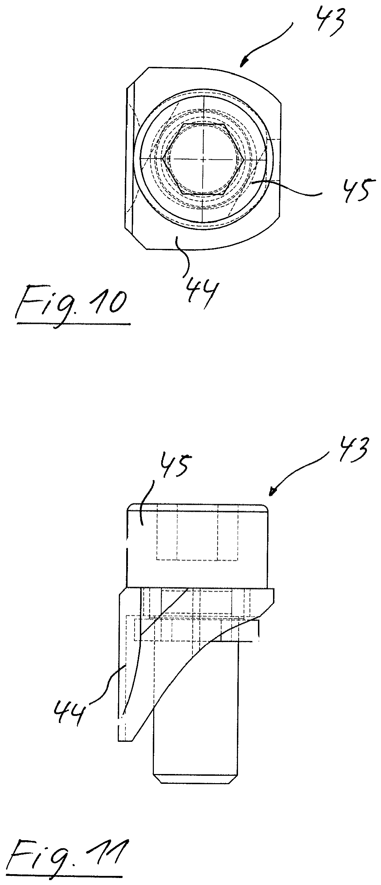

Wie insbesondere in den Figuren 10 und 11 gezeigt, weisen die Klemmelemente 42 jeweils einen Klemmkeil 44 auf, der in der Klemmstellung in Anlage einen Klemmschaft 34 des zugeordneten Schneidwerkzeugs 13 liegt und dieses in der Werkzeugaufnahme 15a-e festklemmt. Wie weiter in Figuren 10 und 11 gezeigt, weisen die Klemmelemente 42 jeweils eine Klemmschraube 45 auf, auf der der Klemmkeil 44 sitzt, wobei die Klemmschraube 45 beim Einschrauben in das zugordnete Gewindeloch einer Klemmleiste 42 den Klemmkeil 44 in die Klemmstellung verlagert.

Wie insbesondere in Figur 1 gezeigt, sind mehrere Klemmelemente-Gruppen 46a, 46b zu jeweils zwei Klemmelementen 43 an der Klemmleiste 42 angeordnet. In diesem Fall ist eine untere Klemmelement-Gruppe 46a dem Tragteil 36 zugeordnet, während dem oberen Positionsvorgabeteil 37 die obere Klemmelement-Gruppe 46b zugeordnet ist. Wichtig ist, dass beide Komponenten des Klemmschafts 34, also das Tragteil 36 und das Positionsvorgabeteil 37 durch jeweils zwei Klemmschrauben 45 in der zugeordneten Werkzeugaufnahme 15a-e festgeklemmt sind. Durch die Zweiteilung des Klemmschafts 34 ist es möglich, zum Werkzeugwechsel lediglich das Tragteil 36 auszutauschen, während das Positionsvorgabeteil 30 in der nach wie vor korrekt ausgerichteten Position im Werkzeughalter 12 eingespannt bleibt.

## Patentansprüche

1. Schneidvorrichtung zur spanabhebenden Bearbeitung von Werkstücken, mit einem Werkzeughalter (12), der mehrere in einer Aufreihungsrichtung (14) aneinander gereihte Werkzeugaufnahmen (15a-e) für Schneidwerkzeuge (13) aufweist, wobei der Werkzeughalter (12) ein Kühlschmierstoffkanalsystem (17) aufweist, das mehrere jeweils in einer Werkzeugaufnahme (15a-e) ausmündende Kühlschmierstoff-Auslassöffnungen (19a-e) zur Fluidverbindung mit einem das in der Werkzeugaufnahme (15a-e) fixierte Schneidwerkzeug (13) durchsetzenden Werkzeug-Kühlschmierstoffkanal (20) aufweist, wobei dem Kühlschmierstoff-Hauptkanal (27) Absperrmittel zugeordnet sind, **dadurch gekennzeichnet, dass** die Absperrmittel derart in den Kühlschmierstoff-Hauptkanal (27) einschaltbar sind, dass das Kühlschmierstoffkanalsystem (17) mehrere jeweils mit einer Kühlschmierstoffquelle verbindbare Einspeiseanschlüsse (18a-d) an einer Außenseite des Werkzeughalters (12) aufweist und das Kühlschmierstoffkanalsystem (17) in mehrere Systemabschnitte (50a, 50b) unterteilbar ist, die jeweils unabhängig voneinander über diesen zugeordnete Einspeiseanschlüsse (18a-d) mit Kühlschmierstoff beaufschlagbar sind.

2. Schneidvorrichtung nach Anspruch 1, **dadurch gekennzeichnet, dass** das Kühlschmierstoffkanalsystem (17) wenigstens einen Kühlschmierstoff-Hauptkanal (27) aufweist, der mit dem wenigstens einen Einspeiseanschluss (18a-d) verbunden ist und von dem aus Kühlschmierstoff-Auslasskanäle (29a-e) abzweigen, die jeweils mit den Kühlschmierstoff-Auslassöffnungen (19a-e) verbunden sind.

3. Schneidvorrichtung nach Anspruch 2, **dadurch gekennzeichnet, dass** sich der Kühlschmierstoff-Hauptkanal (27) in der Aufreihungsrichtung (14) der Werkzeugaufnahmen (15a-e) erstreckt.

4. Schneidvorrichtung nach einem der vorhergehenden Ansprüche, **dadurch gekennzeichnet, dass** nicht mit einer Kühlschmierstoffquelle verbundene Einspeiseanschlüsse der Einspeiseanschlüsse (18a-d) jeweils mittels Verschlusselementen (26) verschlossen sind.

5. Schneidvorrichtung nach einem der vorhergehenden Ansprüche, **dadurch gekennzeichnet, dass** die Absperrmittel ein von der Außenseite des Werkzeughalters (12) her betätigbares Absperrelement aufweisen, wobei vorzugsweise das Absperrelement als Sperrschraube (31) ausgebildet ist.

6. Schneidvorrichtung nach Anspruch 5, **dadurch gekennzeichnet, dass** die Werkzeug-Kühlschmierstoff-Einlassöffnung (38) als Langloch ausgebildet ist.

7. Schneidvorrichtung nach einem der Ansprüche 5 oder 6, **dadurch gekennzeichnet, dass** die Klemmmittel (16) eine längs zur zugeordneten Werkzeugaufnahme (15a-e) ausgebildete Klemmleiste (42) aufweisen, in der mehrere Klemmelemente (43) aufgenommen sind, die jeweils zwischen einer ein Schneidwerkzeug
(13) in der Werkzeugaufnahme (15a-e) festklemmenden Klemmstellung und einer das Schneidwerkzeug (13) freigebenden Freigabestellung verstellbar sind.

8. Schneidvorrichtung nach Anspruch 7, **dadurch gekennzeichnet, dass** die Klemmelemente (43) jeweils einen Klemmkeil (44) aufweisen, der in der Klemmstellung in Anlage an den Klemmschaft (34) des zugeordneten Schneidwerkzeugs (13) liegt und dieses in der Werkzeugaufnahme (15a-e) festklemmt.

9. Schneidvorrichtung nach Anspruch 8, **dadurch gekennzeichnet, dass** die Klemmelemente jeweils eine Klemmschraube (45) aufweisen, auf der der Klemmkeil (44) sitzt, wobei die Klemmschraube (45) beim Einschrauben in ein zugeordnetes Gewindeloch an der Klemmleiste (42) den Klemmkeil (44) in die Klemmstellung verlagert.

10. Schneidvorrichtung nach Anspruch 9, **dadurch gekennzeichnet, dass** mehrere Klemmelement-Gruppen (46a, 46b) zu jeweils wenigstens zwei Klemmelementen (43) an der Klemmleiste (42) angeordnet sind.

11. Schneidvorrichtung nach Anspruch 10, **dadurch gekennzeichnet, dass** der Klemmschaft (34) wenigstens eines der Schneidwerkzeuge (13) mehrteilig ist, mit einem Schneidmittel (35) aufweisenden Tragteil (36) und einem Positionsvorgabeteil (37), die voneinander unabhängig in der zugeordneten Werkzeugaufnahme (15a-e) festklemmbar sind, derart, dass dem Positionsvorgabeteil (37) eine Klemmelement-Gruppe (46a, 46b) und dem Tragteil (36) eine andere Klemmelement-Gruppe (46a, 46b) zugeordnet und durch diese in der Werkzeugaufnahme (15a-e) festgeklemmt sind.

## Claims

1. Cutting device for machining workpieces, with a tool holder (12) having several tool mounts (15a-e) lined up in a line-up direction (14) for cutting tools (13), wherein the tool holder (12) has a cooling lubricant passage system (17), which has several cooling lubricant outlet openings (19a-e), each terminating into a tool mount (15a-e), for a fluid connection to a tool cooling lubricant passage (20) passing through the cutting tool (13) fixed in the tool mount (15a-e), wherein shut-off means are assigned to the cooling lubricant main passage (27), **characterised in that** the shut-off means can be incorporated into the cooling lubricant main passage (27) in such a way that the cooling lubricant passage system (17) has several feed connections (18a-d), each connectable to a cooling lubricant source, on an outside of the tool holder (12) and the cooling lubricant passage system (17) can be divided into several system sections (50a, 50b), each of which can be supplied independently of another with cooling lubricant via feed connections (18a-d) assigned thereto.

2. Cutting device according to claim 1, **characterised in that** the cooling lubricant passage system (17) has at least one cooling lubricant main passage (27), which is connected to the at least one feed connection (18a-d) and from which branch cooling lubricant outlet passages (29a-e), each of which is connected to the cooling lubricant outlet openings (19a-e).

3. Cutting device according to claim 2, **characterised in that** the cooling lubricant main passage (27) extends in the line-up direction (14) of the tool mounts (15a-e).

4. Cutting device according to any of the preceding claims, **characterised in that** feed connections of the feed connections (18a-d) which are not connected to a cooling lubricant source are in each case closed by means of closing elements (26).

5. Cutting device according to any of the preceding claims, **characterised in that** the shut-off means have a shut-off element which can be operated from the outside of the tool holder (12), the shut-off element being preferably designed as locking screw (31).

6. Cutting device according to claim 5, **characterised in that** the tool cooling lubricant inlet opening (38) is designed as a slot.

7. Cutting device according to any of claims 5 or 6, **characterised in that** the clamping means (16) have a clamping rail (42), which is formed along the associated tool mount (15a-e) and in which several clamping elements (43) are accommodated, each of which can be adjusted between a clamping position clamping a cutting tool (13) in the tool mount (15a-e) and a release position releasing the cutting tool (13).

8. Cutting device according to claim 7, **characterised in that** each of the clamping elements (43) has a clamping wedge (44), which is in contact with the clamping shank (34) of the associated cutting tool (13) in the clamping position and clamps it in the tool mount (15a-e).

9. Cutting device according to claim 8, **characterised in that** each of the clamping elements has a clamping screw (45), on which the clamping wedge (44) sits, wherein the clamping screw (45), when screwed into an associated threaded hole at the clamping rail (42), moves the clamping wedge (44) into the clamping position.

10. Cutting device according to claim 9, **characterised in that** several clamping element groups (46a, 46b) of at least two clamping elements (43) each are arranged at the clamping rail (42).

11. Cutting device according to claim 10, **characterised in that** the clamping shank (34) of at least one of the cutting tools (13) is of a multi-part design, with a support part (36) having cutting means (35) and a position presetting part (37), which can be clamped in the associated tool mount (15a-e) independently of each other in such a way that one clamping element group (46a, 46b) is assigned to the position presetting part (37) and another clamping element group (46a, 46b) is assigned to the support part (36), which parts are thereby clamped in the tool mount (15a-e).

## Revendications

1. Dispositif de coupe destiné à usiner par enlèvement de copeaux des pièces, avec un porte-outil (12), qui présente plusieurs logements d'outil (15a - e) alignés les uns sur les autres dans une direction d'alignement (14) pour des outils de coupe (13), dans lequel le porte-outil (12) présente un système de canal pour lubrifiant de refroidissement (17), qui présente plusieurs ouvertures de sortie de lubrifiant de refroidissement (19a - e) débouchant respectivement dans un logement d'outil (15a - e), destinées à se trouver en communication fluidique avec un canal pour lubrifiant de refroidissement d'outil (20) traversant l'outil de coupe (13) bloqué dans le logement d'outil (15a - e), dans lequel des moyens d'arrêt sont associés au canal principal pour lubrifiant de refroidissement (27), **caractérisé en ce que** les moyens d'arrêt peuvent être activés dans le canal principal pour lubrifiant de refroidissement (27) de telle manière que le système de canal pour lubrifiant de refroidissement (17) présente plusieurs raccords d'injection (18a - d), pouvant être reliés respectivement à une source de lubrifiant de refroidissement, sur un côté extérieur du porte-outil (12), et
le système de canal pour lubrifiant de refroidissement (17) peut être divisé en plusieurs tronçons de système (50a, 50b), qui peuvent être soumis respectivement indépendamment les uns des autres à l'action de lubrifiant de refroidissement par l'intermédiaire desdits raccords d'injection (18a - d) associés à ceux-ci.

2. Dispositif de coupe selon la revendication 1, **caractérisé en ce que** le système de canal de lubrifiant de refroidissement (17) présente au moins un canal principal pour lubrifiant de refroidissement (27), qui est relié à au moins au raccord d'injection (18a - d) et duquel dévient des canaux de sortie pour lubrifiant de refroidissement (29a - e), qui sont reliés respectivement à des ouvertures de sortie pour lubrifiant de refroidissement (19a - e).

3. Dispositif de coupe selon la revendication 2, **caractérisé en ce que** le canal principal pour lubrifiant de refroidissement (27) s'étend dans la direction d'alignement (14) des logements d'outil (15a - e).

4. Dispositif de coupe selon l'une quelconque des revendications précédentes, **caractérisé en ce que**
des raccords d'injection non reliés à une source de lubrifiant de refroidissement des raccords d'injection (18a - d) sont fermés respectivement au moyen d'éléments de fermeture (26).

5. Dispositif de coupe selon l'une quelconque des revendications précédentes, **caractérisé en ce que** les moyens d'arrêt présentent un élément d'arrêt pouvant être actionné depuis le côté extérieur du porte-outil (12), dans lequel de préférence l'élément d'arrêt est réalisé en tant que vis de blocage (31).

6. Dispositif de coupe selon la revendication 5, **caractérisé en ce que** l'ouverture d'entrée de lubrifiant de refroidissement d'outil (38) est réalisée en tant que trou oblong.

7. Dispositif de coupe selon l'une quelconque des revendications 5 ou 6, **caractérisé en ce que** les moyens de serrage (16) présentent une baguette de serrage (42) réalisée longitudinalement par rapport au logement d'outil (15a - e) associé, dans laquelle plusieurs éléments de serrage (43) sont logés, qui peuvent être ajustés respectivement entre une position de serrage immobilisant par serrage un outil de coupe (13) dans le logement d'outil (15a - e) et une position de desserrage desserrant l'outil de coupe (13).

8. Dispositif de coupe selon la revendication 7, **caractérisé en ce que** les éléments de serrage (43) présentent respectivement une partie de serrage (44), qui se situe dans la position de serrage en appui sur le manche de serrage (34) de l'outil de coupe (13) associé et immobilise par serrage celui-ci dans le logement d'outil (15a - e).

9. Dispositif de coupe selon la revendication 8, **caractérisé en ce que** les éléments de serrage présentent respectivement une vis de serrage (45), sur laquelle siège la clavette de serrage (44), dans lequel la vis de serrage (45) déplace la clavette de serrage (44) dans la position de serrage lors du vissage dans un trou fileté associé sur la baguette de serrage (42).

10. Dispositif de coupe selon la revendication 9, **caractérisé en ce que** plusieurs groupes d'élément de serrage (46a, 46b) sont disposés sur la baguette de serrage (42) par rapport respectivement à au moins deux éléments de serrage (43).

11. Dispositif de coupe selon la revendication 10, **caractérisé en ce que** le manche de serrage (34) d'au moins un des outils de coupe (13) est en plusieurs parties, avec une partie de support (36) présentant des moyens de coupe (35) et une partie de spécification de position (37), qui peuvent être immobilisées par serrage indépendamment l'une de l'autre dans le logement d'outil (15a - e) associé de telle manière qu'un groupe d'éléments de serrage (46a, 46b) est associé à la partie de spécification de position (37) et un autre groupe d'éléments de serrage (46a, 46b) est associé à la partie de support (36) et sont immobilisés par serrage par celles-ci dans le logement d'outil (15a - e).
